# EUROPEAN PATENT SPECIFICATION

(11) **EP 0 729 794 B1**
(45) Date of publication and mention of the grant of the patent: **21.11.2001**
(21) Application number: 96301350.3
(22) Date of filing: 28.02.1996
(51) Int. Cl.: B05D 5/06, B05D 1/18, B44F 9/08

(54) **Opal-like diffraction chromogenic film**
Opal-ähnlicher Beugungschromatogenfilm
Film chromogène par diffraction ressemblant à de l'opale

(30) Priority: 28.02.1995 JP 4103895
(43) Date of publication of application: 04.09.1996
(73) Proprietor: RESEARCH DEVELOPMENT CORPORATION OF JAPAN, Kawaguchi-shi, Saitama-ken 332 (JP)
(72) Inventor: Nagayama, Kuniaki, Suginami-ku, Tokyo (JP); Dimitrov, Anthony S., Matsushiro Tsukuba-shi, Ibaragi (JP)
(74) Representative: Calamita, Roberto

(56) References cited:
- EP-A- 0 541 401
- EP-A- 0 586 215
- EP-A- 0 640 406
- PATENT ABSTRACTS OF JAPAN vol. 95, no. 002 & JP-A-07 043527 (RES DEV CORP OF JAPAN;OTHERS: 01), 14 February 1995,

## Description

### FIELD OF THE INVENTION

The present invention relates to an opal-like diffraction chromogenic film. More particularly, the present invention relates to the use of a hexagonal close-packed grating monolayer particulate film of micron-order particulates as a chromogenic film having an opal-like diffraction pattern, which is useful as an aesthetic material and for decorative purposes in the form of an opal-like diffraction chromogenic film with few-dead angles.

### PRIOR ART

Various diffraction color developing methods using diffraction phenomenon have conventionally been known in decoration and aesthetics areas.

These conventional methods include, for example:
(1) Diffraction color development utilizing a diffraction grating from mechanical linear streaks (holography, for example);
(2) Diffraction color development based on linear and spot diffraction gratings from the development of a photograph;
(3) Diffraction color development through the preparation of a high-accuracy diffraction grating by the LSI pattern preparation technology;
(4) Weak diffraction color development based on the preparation of convex-concave irregularities of a solid surface; and
(5) Preparation of irregular gratings through the application of an enamelling agent containing pigment particles, and weak color development occurring along with such application.

EP-A1-0 640 406 is a prior publication under Article 54(3) EPC and relates to a method for producing a particle film useful as an interference and reflective film. The method comprises contacting a solid or liquid substrate with a particle dispersive suspension, and sweeping, spreading and moving the leading edge of a meniscus formed at the 3-phrase contact line by atmospheric air or gas, substrate and suspension, thereby forming the particles assembled, allowing control of the number of particle layers.

However, all these conventional methods have the following problems:
(1) The diffracted light from mechanical linear streaks, while showing a high luminance, exhibits a strong diffraction phenomenon only in a direction at right angles to the line running direction, and contains dead angles.
(2) Linear streaks and spot gratings based on photographic development permit the preparation of high-accuracy diffraction gratings for a size larger than 1 *µ*m, but it is difficult to achieve a high luminance since the gratings are developed in a film. Because of the size limitation of photosensitive particles, furthermore, size variations of lines and spots intrinsic to development occur at a diffraction grating period of under 1 *µ*m, resulting in dimly diffracted light.
(3) LST pattern technology, while permitting the preparation of linear or spot diffraction gratings with a high resolution (0.3 *µ*m), is very expensive.
(4) Irregular gratings (spots) obtained by granulating with sand paper or by etching give only a very weak diffracted light and lead to diffuse reflection.
(5) When as solvent (enamelling agent) containing pigment particulates is applied, these particulates produce irregular gratings and the resulting diffuse reflection leads to a very weak diffracted light.

### SUMMARY OF THE INVENTION

The present invention has as an object to solve the defects in the conventional diffraction color development described above, by providing high-luminance gratings which comprise a film composed of particulates and having few dead angles.

As means to solve the above-mentioned problems, the present invention provides the use of a hexagonal close-packed grating monolayer particulate film of micron-order particulates as a chromogenic film having an opal-like diffraction pattern.

### BRIEF DESCRIPTION OF THE FIGURES

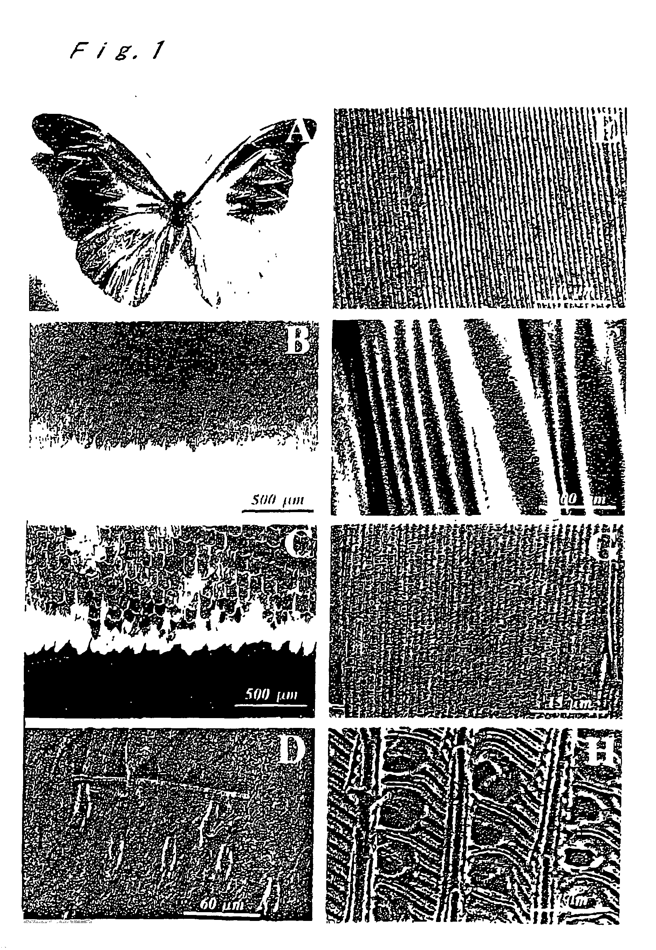

Fig. 1 (A) (B) (C) (D) (E) (F) (G) (H) shows the following;
Fig. 1 (A) is a photograph, taken in place of a drawing, showing a whole view of the Morpho butterfly; (B) is a photomicrograph in place of a drawing, taken with an angle of incidence showing no diffraction, showing a wing of the Morpho butterfly; (C) is a diffraction light photomicrograph thereof; (D) is a scanning-type electron photomicrograph taken in place of a drawing, showing the adsorption of the scales to the wing surface; (E) is a scanning type electron photomicrograph taken in place of a drawing, showing a diffraction grating of the scale surface at the center of a wing; (F) is an enlarged photograph thereof; (G) is a scanning-type electron photomicrograph taken in place of a drawing, showing a diffraction grating of the scales surrounding a wing; and (H) is an enlarged photograph thereof;

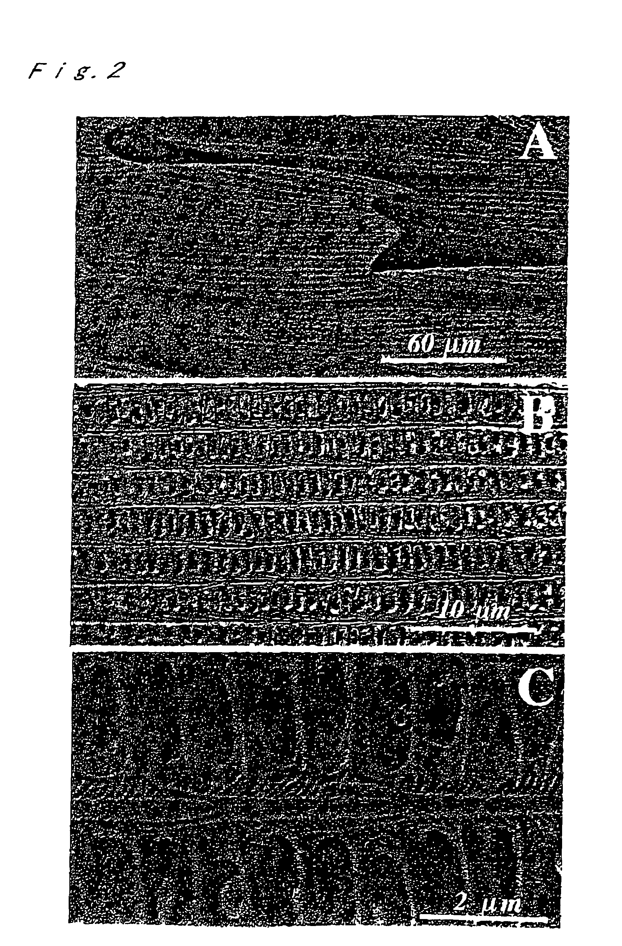

Fig. 2 (A) (B) (C) shows the following;
Fig 2 (A) is a scanning-type electron photomicrograph taken in place of a drawing, showing scales of a butterfly not developing a color; (B) is a scanning type electron photomicrograph taken in place of a drawing, showing the surface texture of the corresponding scale; and (C) is an enlarged photograph thereof;
Fig.3 (A) (B) (C) (D) shows the following;

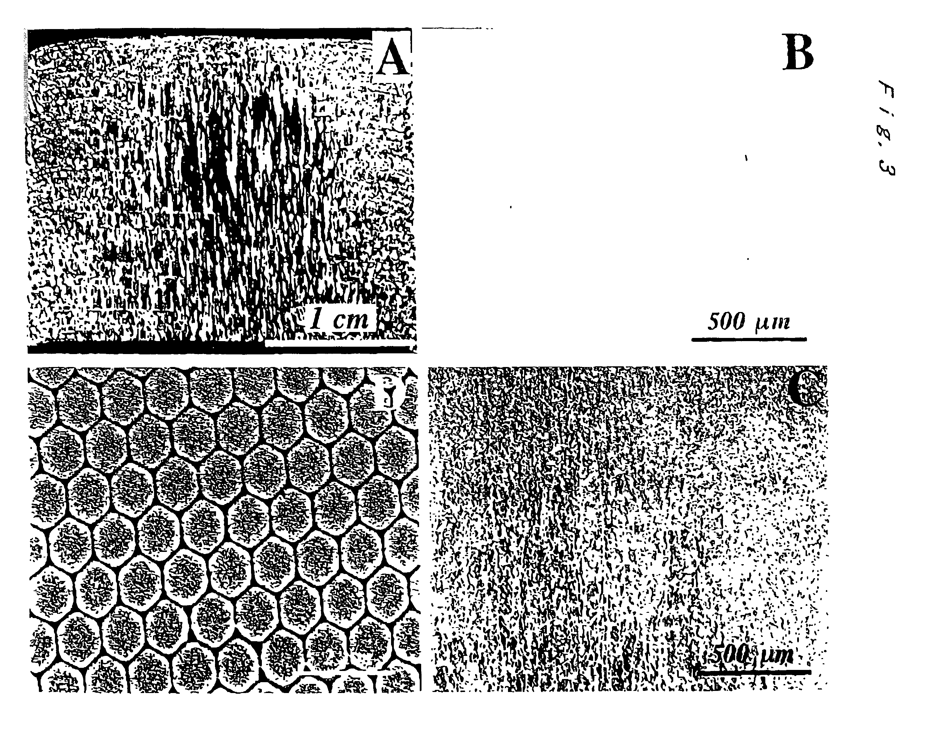

Fig. 3 (A) is a photomicrograph taken in place of a drawing, showing the whole view of a polystyrene monoparticulate film exhibiting diffraction color development as an embodiment, (B) is a corresponding photomicrograph taken with an angle of incidence showing no diffraction of light; (C) is a diffraction light photomicrograph taken in place of a drawing, showing a polystyrene monoparticulate film; and (D) is a scanning-type electron photomicrograph taken in place of a drawing, showing a monocrystalline region in a polystyrene monoparticulate film;

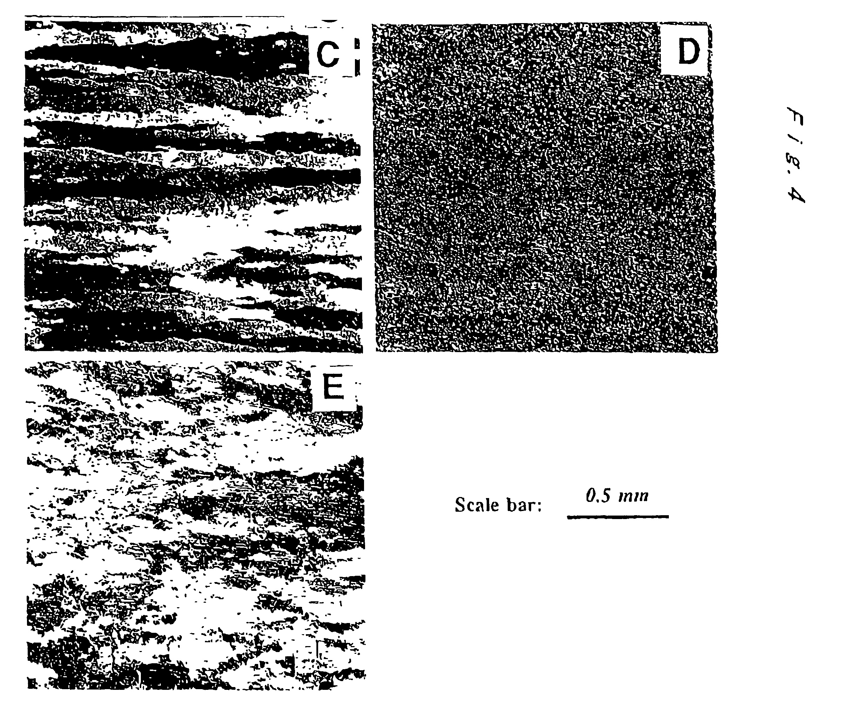

Fig. 4 (C) (D) (E) shows the following;
Fig 4 (C) is a photomicrograph taken in place of a drawing, showing diffraction color development by sunlight of a polystyrene (0.953 *µ*m) monoparticulate film; (D) is a photomicrograph taken in place of a drawing, showing diffraction color development by sunlight of a polystyrene (1.083 *µ*m) monoparticulate film; (E) is a photomicrograph taken in place of a drawing, showing diffraction color development by sunlight of a polystyrene (2.106 *µ*m) monoparticulate film;

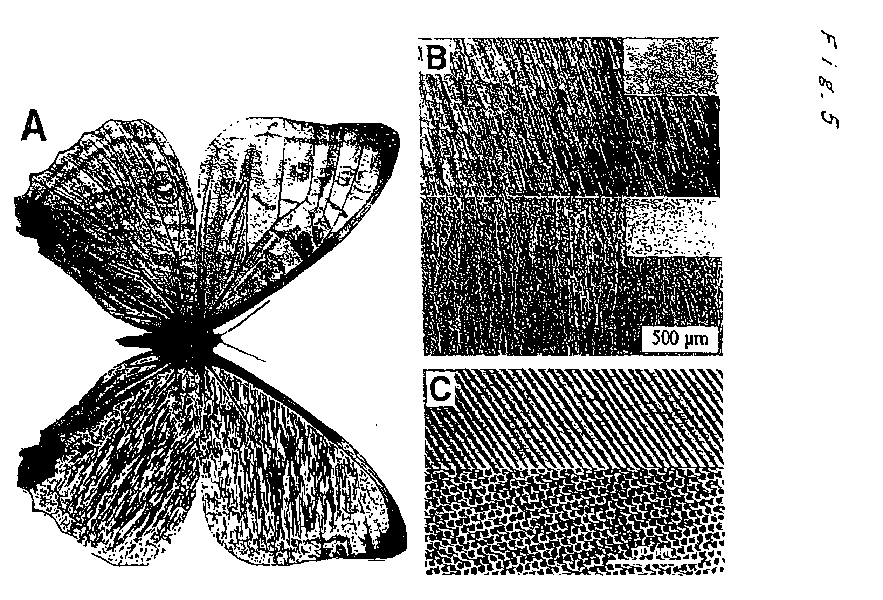

Fig. 5 shows a photograph taken in place of a drawing, comparing color development between the wing of Morpho SULKOWSKI (Morpho (Cytheritis) stoffeli stoffeli Le Moults & Real) from Peru, i.e. Morpho SULKOWSKI (Morpho (Cytheritis) stoffeli stoffeli Le Moults & Real) originating in Peru (upper half of Fig. A, left wing) and a Morpho butterfly wing synthesized with a 0.953 *µ*m polystyrene monoparticulate film (lower half of Fig. A, right wing). Fig. 5 (A) is a bare-eye photograph taken by irradiating with a white light; (B) is a diffraction light photomicrograph taken in a dark-field mode (inlay at right upper portion is a photograph showing no diffraction due to the wrong incidence angle): upper half: the scale texture of a Morpho butterfly; lower half: the domain structure of a polystyrene monoparticulate film; and (C) a scanning-type electron photomicrograph: upper half: diffraction grating pattern of a scale surface; lower half: a close-packed pattern of a monoparticulate film;

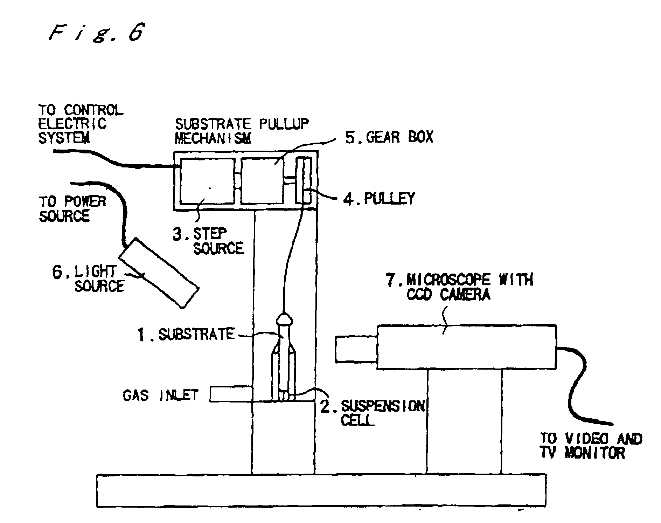

Fig. 6 shows a side view illustrating an embodiment of the apparatus useful in the present invention;

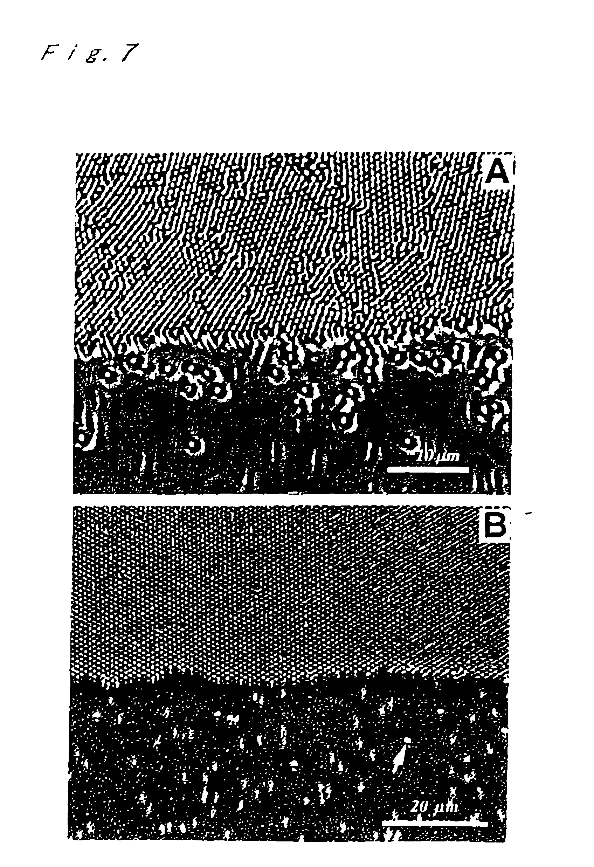

Fig. 7 shows a photomicrograph taken in place of a drawing, showing the process of growth of a polystyrene monoparticulate film;

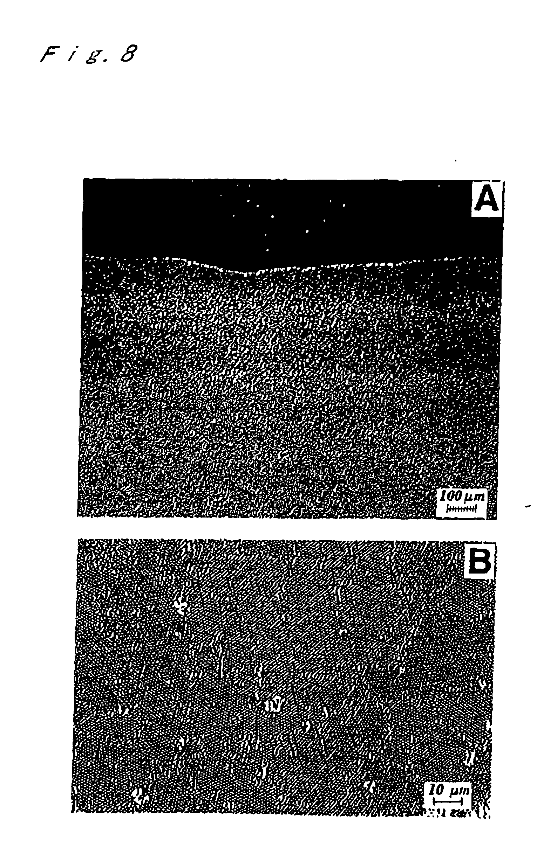

Fig. 8 shows a photomicrograph taken in place of a drawing, showing the process of growth of a monoparticulate film of silica particulates; and

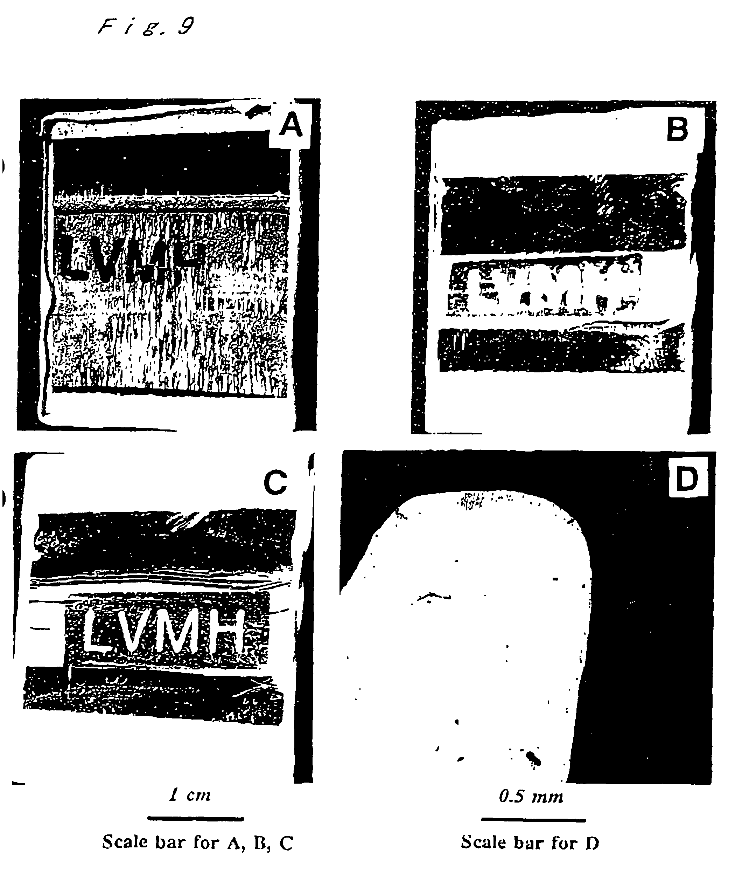

Fig. 9 shows a photomicrograph taken in place of a drawing, showing the results of lithography of a monoparticulate film.

### DETAILED DESCRIPTION OF THE INVENTION

Use of a diffraction chromogenic film according to the invention achieves an opal-like high-luminance diffraction pattern with fewer dead angles. More specifically, such a chromogenic film was derived from a detailed study of the beautiful opal-like diffraction light of well-known Morpho butterfly's wing, and on the basis of the findings of the study, the present invention was perfected as an independent and reproducible construction.

The principle of light emission from the Morpho butterfly's wing is as follows.

An experiment was carried out to investigate how the color development of the Morpho butterfly originates. Surface textures of wings of three kinds of butterfly (of which two were Morpho butterflies) were observed with different microscopies. It was confirmed that Morpho RHETENOR (Morpho (Cypritis) rhetenor rhetenor Cramer) from Guiana develops color of ultramarine, and regular streaks of 0.65 *µ*m run on the surface of the scales of the wing. Morpho SULKOWSKI (Morpho (Cytheritis) stoffeli stoffeli Le Moults & Real) from Peru presents sky blue color development, and regular streaks of 0.8 *µ*m run on the surface of the scales of the wing. A butterfly from a Tokyo suburb not having diffraction color development shows on the other hand a scale surface texture having a regularity of several *µ*m. These findings suggest that the presence of diffraction gratings of the order of the wavelength of light is therefore important for the beautiful diffraction color development of the Morpho butterfly. More specifically, Fig. 1 demonstrates that the color development of the Morpho rhetenor's (Morpho (Cypritis) rhetenor rhetenor Cramer) wing does not originate in pigment: Fig. 1 (A) represents a whole view and Fig. 1 (B) shows scales with a tilted reflection light of a microscope with the wrong incidence angle for diffraction. This is the original color of the butterfly's wing. A photomicrograph of the same object as viewed with dark-field diffraction light is shown in Fig. 1 (C): clear color development of ultramarine is mainly observed, provided however that color changes into brown and yellow in the peripheral portions of the wing. To observe textures corresponding to these colors, the individual scale surfaces are observed by a scanning-type electron microscope. These are shown in Figs. 1 (D) to (H). Fig. 1 (D) illustrates contact of the scales and the wing sheet. Figs. 1 (E) and (F) are enlarged photographs of the surface of the ultramarine color development section of the scale; large streaks are observed running at intervals of 0.65 *µ*m. Figs. 1 (G) and (H) are enlarged photographs of the same scale surfaces of yellow color development. Intervals of diffraction gratings are larger than 1 *µ*m. As shown in Figs. 1 (F) and (H), a finer texture is observed between gratings. Fig. 2 (A) shows, in contrast, scales of the butterfly from the Tokyo suburb, and Figs. 2 (B) and (C) are enlarged photographs of the surface thereof. Intervals between regular linear gratings are observed to be about 5 *µ* m. These observations reveal that the beautiful color development of the Morpho butterflies is diffracted light caused by the regular texture of the surface of the order of wavelength, having no relationship with the color of the material.

From the findings described above, the present invention studied color development of a monoparticulate film based on particulates of a wavelength-order and corresponding texture, and completed an opal-like diffraction chromogenic film free from dead angles, having a hexagonally close-packed grating monolayer film of micron-order particulates. It is free from dead angles because the three grating directions intersect at an angle of 60° in the hexagonal particle arrays.

This diffraction chromogenic film for use in the invention can be manufactured by a method for forming a monoparticulate film based on the advection and accumulation of particulates onto a solid substrate, which has been established by the present inventors. This method comprises the steps of immersing a solid substrate in an aqueous suspension containing particulates, such as polymer or ceramics, and pulling up the substrate under closely controlled conditions, thereby forming a monoparticulate film on the substrate.

Because the low adsorption property relative to a substrate is positively utilized during formation of this monoparticulate film, it is possible to lithograph mechanically and easily to a desired pattern.

For example, particulates can be stripped off by pressing a stamp, in which an adhesive tape from which a desired pattern has been cut off is affixed to a flat glass surface, against the monoparticulate film. Patterning can thus easily be accomplished. It is needless to mention that other more precise methods using irradiation by electron beam or ions are also applicable.

The fixing of the monoparticulate film is also easy. In response to properties of the particulate used, fixing may be accomplished by irradiation of an energy beam such as an electron beam, ions or light, by heating, or by increased physical adsorption with the particulate through hydrophilisation or hydrophobization of the substrate surface. For fixing, such means as evaporation of a metal such as gold or silver, or application thereof may be considered. These means may be used also for intensifying the color development of the chromogenic film, in addition to the use thereof for fixing. It is effective, for example, to evaporate silver or gold in the form of a film having a thickness of about 10 nm.

The diffraction chromogenic film for use in the present invention can be used for various applications, by using any of several combinations of the method for forming a particulate monolayer film, lithography and fixing, as described above.

The diffraction chromogenic film itself is very useful as a material for decoration and aesthetics purposes.

Now, the present invention is described in further detail by means of examples.

### EXAMPLES

### A. Color development of a hexagonally close-packed grating monolayer film of micron-order particulates (monoparticulate film):

Color development of the monoparticulate film based on wavelength-order particulates (polystyrene balls) and the corresponding texture are described below. Fig. 3(A) is a whole view of the color development of the monoparticulate film. Fig. 3(B) is a photomicrograph as observed with an angle of no diffraction: there is no color development because polystyrene balls are colorless. Fig. 3(C) is a photomicrograph of the same object as viewed with a proper angle showing diffraction in a dark field: clear diffraction color development is observed. The monoparticulate film is not totally monocrystalline, but is of a polycrystalline texture in which crystal orientations differ slightly among them, resulting in colors dependent upon the crystal orientation. In Fig. 3(C), many streak defects are observed between the monocrystalline regions. An enlarged view obtained through an electron microscope is shown in Fig. 3(D). The interior within a monocrystalline region presents such a monolayer hexagonal close-packed grating. The observation that the color development is dependent upon the size of particulate, made with sunlight as the light source, permits confirmation that, when the particulate size is of the same order as the wavelengths of visible light, the diffraction color development is dependent upon the particle size and the crystal orientation, as 0.953 *µ*m (Fig. 4 (C)), 1.083 *µ*m (Fig. 4(D)), and 2.106 *µ*m (Fig. 4(E)).

Fig. 5 compares the color development of the wing of the Morpho butterfly and that of a monoparticulate film. The processes of color development with the same incidence of a monoparticulate film of 0.953 *µ*m polystyrene balls and Morpho SULKOWSKI (Morpho (Cytheritis) stoffeli stoffeli Le Moults & Real) are shown with a different expansion. Fig. 5(A) illustrates real images of a Morpho butterfly: the upper image is a natural one, and the lower image is a monoparticulate film comprising a chromogenic film, but in the shape of a butterfly wing. The artificial wing was prepared by enlarging an actual sized one by a computer. The color development shown in Fig. 5(A) was taken by irradiating with light from above to below at an angle of incidence of 60°. When the incident direction is turned by 90° with the same angle of incidence, the color development of the Morpho butterfly disappears. On the other hand, the color development of the artificial wing comprising the monoparticulate film showed almost no change, i.e. there was no dead angle in the color development by the diffracted light. Fig. 5(B) is an enlarged view of a wing of a Morpho butterfly and a monoparticulate film as observed through an optical microscope: a crystal region of almost the same order as 100 *µ*m scale of the butterfly is observed. Fig. 5(C) is an enlarged view observed through an electron microscope: the beautiful shine of the Morpho butterfly comes from very regular linear diffraction gratings (Fig. 5(C), upper stage). On the other hand, Fig. 5(C) reveals that the artificial monoparticulate film also forms very regular spot-like diffraction gratings, with a period substantially equal to that of the Morpho butterfly.

It is thus suggested that reflection of light from a surface having a high-regularity texture has a high-luminance of diffracted light, and the extent of color development thereof depends upon the grating period. The color development of an artificial monoparticulate film is however different from that of a Morpho butterfly in two points. The first point is due to the difference in texture between the two cases in a color development region of the order of 100 *µ*m, as is clear from Fig. 5(B). While the scales of a Morpho butterfly has perfectly uniform orientations of texture, the monoparticulate film has slightly varying crystal orientations, thus resulting, not in a single color development, but in a color zone having a range around a specific color. The two cases are similar to each other in that shining diffraction color development is available. The second point is that the color development of the artificial particulate film has no dead angle, surpassing nature.

### B. Preparation of monoparticulate film:

The present inventors have already proposed the principle of preparation. More specifically, this method of preparation is as shown in a schematic drawing of the apparatus for preparation given in Fig. 6. That is, a glass substrate previously subjected to a hydrophilization treatment is immersed in a suspension containing the particulates, and pulled up by means of a small pulley rotated by a step motor. The speed is adjusted by altering the gear ratio. The growth of the monoparticulate film is constantly observed through a horizontal type microscope while irradiating a light onto the film growth section. An enlarged image is converted by a CCD camera into a TV image, and the process of growth is monitored in a real time manner. For a typical apparatus, the cell has dimensions of 100 x 40 x 10 mm, and the pulley has a diameter of 2 cm. The microscope has a resolution of 0.35 *µ*m, and the pulling speed is variable between 0.1 *µ*m/sec and 10 *µ*m/sec.

A monoparticulate film was prepared as follows.
<a> Particulate: polystyrene particulate (properties as shown in Table 1) and 1 *µ*m silica particulate

**Table 1**

| Diameter [nm] | Polydispersity [nm] | Density [g/cm³] | Refractive index |
|---|---|---|---|
| 2106 | ± 17 | 1.053 | 1.580 |
| 1096 | ± 7 | 1.057 | 1.592 |
| 1083 | ± 10 | 1.058 | 1.594 |
| 953 | ± 9 | 1.057 | 1.594 |
| 814 | ± 23 | 1.065 | 1.565 |
| 506 | ± 10 | 1.054 | 1.595 |
| 479 | ± 5 | 1.054 | 1.595 |
| 309 | ± 4 | 1.054 | 1.595 |
| 144 | ± 2 | 1.065 | 1.565 |
| 79 | ± 2 | 1.065 | 1.592 |

<b> Solvent: For polystyrene balls, pure water, or an aqueous solution containing the following ingredients:
a) 0.001 mol/l sodium dodecyl sulfate (SDS)
b) 0.001 mol/l octanol
c) 0.01 mg/ml ferritin
For silica balls, 2,2,2-trifluoroethanol
<c> Glass and treatment thereof: Slide glass (76 x 26 x 1 mm) was subjected to a hydrophilization treatment by the following procedure: immersing it in a chromic acid solution for a whole day and night, rinsing it with water, then immersing it in 0.1 M SDS or ethanol for an hour, rinsing it with water and drying same for the SDS-dipped one, or directly drying the ethanol-dipped one. In order to prepare a uniform monoparticulate film, it suffices to immerse a glass plate in a suspension of particulates and then pull it up slowly. Conditions for film forming in this case are given by the following formula:$\text{ve =} \frac{\text{β} \text{l je}}{\text{0.605} \text{d} \text{(1 - φ)}}$ where, Ve is the crystal growing rate when forming a uniform monoparticulate film (i.e. the pulling speed of the glass plate); β is a hydrodynamic coefficient (about 1); *je* is an evaporation rate of water at a crystal section with a length, *l*; *d* is a diameter of particulate; and φ is a volumic ratio of particulates in suspension. The above Formula [1] is in a sense a formula for film formation under ideal conditions. Actually, therefore, the pulling speed is controlled with due regard to various uneven surface conditions such as differences in wettability, the presence of dust, and variations of particle diameter. The process of growth of the monoparticulate film is constantly monitored with a view to optimizing the pulling speed while watching the process of film growth. An actual example of the growth process of a monoparticulate film in the middle of monitoring is shown in Fig. 7. Fig. 7(A) suggests that 0.814 *µ* m polystyrene particulates are forming a monoparticulate film comprising small regions having different orientations. Fig. 7(B) shows a monocrystal region formed with 0.953 *µ*m polystyrene particulates: a flow of particles running toward a crystalline film. Because of a high particle speed of 100 *µ*m/s, particles in travel look obscure. Bright particles indicated by an arrow are admixed particles having a sufficiently large diameter of at least 0.953 *µ*m, which are at a stand-still since they are strongly pressed against the plate by a surface wetted with water. When using 1 *µ*m silica particulates, particles cannot be kept dispersed in a water suspension for a long period of time before the start of precipitation, because silica has a specific gravity of 1.4 to 1.44. It is therefore impossible to form a satisfactory film through advection and accumulation of the particles. By using trifluoroethanol as a solvent having a specific gravity which is larger than water, the large specific gravity permits satisfactory suspension of silica particles. Fig. 8 gives enlarged photographs showing the process of growth of a silica monoparticulate film and the formation of gratings. In the photomicrograph taken through a dark-field microscope shown in Fig. 8(A), the black portion is a bare glass surface; the green portion is a silica monoparticulate film; and the yellow portion is a film wetted with a silica suspension. These monitor photographs suggest that the principle of formation of a monoparticulate film is based on the advection and accumulation of particles due to evaporation of trifluoroethanol and packing brought about by interparticle (lateral capillary) force in a liquid thin film, as in the case of the polystyrene particulates described above. The hexagonal close-packed film shown in the enlarged photograph of Fig. 8(B) suggests that the interparticle packing force exerts a strong effect.

### C. Adhesive stamp lithography:

As a monoparticulate film is formed by the utilization of the flow of particles, it is assumed that particles in a suspension have originally a low adsorbing property relative to a substrate. After drying, therefore, a monoparticulate film can easily be stripped off from the substrate. By using this fact, it is possible to conduct easy mechanical lithography. A stamp bearing a picture drawn with an adhesive (prepared by affixing an adhesive tape cut along the picture onto a flat glass surface) is prepared, pressed against the monoparticulate film, and particles are stripped off by adhesion. Then, a female picture remains on the monoparticulate film surface, and a male picture on the stamp side, while keeping the texture of the particulate film. This is adhesive stamp lithography using the monoparticulate film. Two-sided adhesive tape was affixed to a glass plate and thick letters LVMH were cut therefrom. With this as a stamp, the picture LVMH was formed by removing particles onto the monoparticulate film. Fig. 9(A) represents a female lithograph of a 0.953 *µ*m monoparticulate film. Fig. 9(B) is a male lithograph of a 1.083 *µ*m monoparticulate film. Fig. 9(C) is a male lithograph of a 0.479 *µ*m monoparticulate film. Fig. 9(D) is an enlarged photograph of a character M shown in Fig 9(A), which shows the clarity of the boundary of lithography.

### D. Intensification of the color development and fixing of the monoparticulate film:

The fixing of a monoparticulate film and the intensification of color development after preparation of a lithograph were found to be easily achievable by evaporation of silver or gold to a thickness of about 10 nm. This metal evaporation increases the refractive index of the particulate film and intensifies the color development. The particles are covered with metal films by metal evaporation, thereby causing strong adherence with the substrate, and the adhering strength is increased to an extent that the above-mentioned adhesive tape does not peel off. The adhering mechanism of the particles is considered to be such that, in addition to the effect of the metal film covering, direct adhesion of particles and the substrate is induced by local heating to a high temperature during evaporation.

Accordingly, as described above in detail, a high-luminance opal-like diffraction chromogenic film free from a dead angle is achieved.

Also for use in the present invention, it is possible to form a film through highly controlled advection and accumulation of a particulate monolayer film and to accomplish lithography, fixing and color development intensification.

## Claims

1. Use of a hexagonal close-packed grating monolayer particulate film of micron-order particulates as a chromogenic film having an opal-like diffraction pattern.

2. Use as claimed in claim 1 wherein said particulates have as diameter in the range of 0.1 to 10 *µ*m.

3. Use as claimed in claim 1 or claim 2 wherein said monolayer particulate film is affixed to a substrate.

4. Use as claimed in claim 3 wherein said substrate is glass.

5. Use as claimed in either of claims 3 and 4 wherein said chromogenic film has been manufactured by immersing said substrate in a suspension of particulates and pulling up the substrate to cause advection and accumulation of particulates to form a monolayer film thereon.

6. Use as claimed in claim 5 wherein the method of manufacture comprises the further step of stripping off the thus-formed monolayer film by means of an adhesive pattern member for lithography.

7. Use as claimed in claim 6 wherein the method of manufacture comprises the further step of evaporating gold or silver onto the thus-formed monolayer particulate film, thereby fixing the monolayer film and intensifying color development.

## Patentansprüche

1. Verwendung eines monomolekularen Dispersionsfilms aus Mikronteilchen mit hexagonalem dichtgepackten Gitter als einen chromogenen bzw. farbbildenden Film mit einem opalähnlichen Beugungsmuster.

2. Verwendung nach Anspruch 1, wobei die Teilchen einen Durchmesser in dem Bereich von 0,1 bis 10 *µ*m aufweisen.

3. Verwendung nach Anspruch 1 oder Anspruch 2, wobei der monomolekulare Dispersionsfilm auf einem Substrat befestigt ist.

4. Verwendung nach Anspruch 3, wobei das Substrat Glas ist.

5. Verwendung nach einem der Ansprüche 3 oder 4, wobei der chromogene Film durch Immersion des Substrats in eine Teilchensuspension und Hochziehen des Substrats hergestellt ist, um eine Advektion und eine Akkumulation von Teilchen zu verursachen, um darauf einen monomolekularen Film zu bilden.

6. Verwendung nach Anspruch 5, wobei das Verfahren zur Herstellung den weiteren Schritt des Ablösens des somit gebildeten monomolekularen Films mittels eines klebenden bzw. haftenden Vorlageelements für eine Lithographie umfaßt.

7. Verwendung nach Anspruch 6, wobei das Verfahren zur Herstellung den weiteren Schritt des Aufdampfens von Gold oder Silber auf den somit gebildeten monomolekularen Dispersionsfilm umfaßt, wodurch der monomolekulare Film fixiert und die Farbentwicklung intensiviert wird.

## Revendications

1. Utilisation d'un film particulaire, monocouche, formant un réseau de diffraction compact hexagonal, de particules de l'ordre du micromètre en tant que film chromogène ayant un spectre de diffraction analogue à de l'opale.

2. Utilisation selon la revendication 1, dans laquelle lesdites particules ont un diamètre dans la gamme de 0,1 à 10 *µ*m.

3. Utilisation selon la revendication 1 ou 2, dans laquelle ledit film particulaire monocouche est fixé à un substrat.

4. Utilisation selon la revendication 3, dans laquelle ledit substrat est du verre.

5. Utilisation selon l'une quelconque des revendications 3 et 4, dans laquelle ledit film chromogène a été fabriqué en immergeant ledit substrat dans une suspension de particules et en remontant le substrat pour provoquer une advection et une accumulation des particules afin de former un film monocouche dessus.

6. Utilisation selon la revendication 5, dans laquelle le procédé de fabrication comprend l'étape supplémentaire consistant à éliminer par pelage le film monocouche ainsi formé à l'aide d'un élément de dessin adhésif pour lithographie.

7. Utilisation selon la revendication 6, dans laquelle le procédé de fabrication comprend l'étape supplémentaire consistant à évaporer de l'or ou de l'argent sur le film particulaire monocouche ainsi formé fixant ainsi le film monocouche et intensifiant le développement de couleur.
